# EUROPEAN PATENT SPECIFICATION

(11) **EP 1 205 378 B1**
(45) Date of publication and mention of the grant of the patent: **12.07.2006**
(21) Application number: 01126792.9
(22) Date of filing: 09.11.2001
(51) Int. Cl.: B62H 1/02, B62H 1/06

(54) **Stand device for a two-wheel vehicle**
Standvorrichtung für ein Zweiradfahrzeug
Dispositif de support automatique pour deux roues

(30) Priority: 09.11.2000 JP 2000341282
(43) Date of publication of application: 15.05.2002
(73) Proprietor: YAMAHA HATSUDOKI KABUSHIKI KAISHA, Iwata-shi Shizuoka-ken (JP)
(72) Inventor: Yamada, Kazunori, Iwata-shi, Shizuoka-ken (JP); Kishimoto, Eiji, Iwata-shi, Shizuoka-ken (JP); Takada, Kazuyoshi, Iwata-shi, Shizuoka-ken (JP)
(74) Representative: Grünecker, Kinkeldey, Stockmair & Schwanhäusser Anwaltssozietät

(56) References cited:
- DE-C- 581 754

## Description

This invention relates to a stand device for a two-wheel vehicle according to the preamble portion of claim 1, in particular a motorcycle and particularly of a stand device for motorcycles capable of standing up the vehicle body using a pair of left and right legs, either with the rear wheel grounded or floated.

A motorcycle, which is not able to keep a standing position except when it is running, has a stand device for standing up the vehicle body, disposed at a lower part thereof, and is provided generally with both of side and main stands in order for the vehicle body to be stood up either with the rear wheel grounded or floated. However, a stand device has also been known, for example, in Japanese Utility Model Publication Sho 51-10536, in which the vehicle body can be stood up either with the rear wheel grounded or floated only by a main stand with a pair of left and right legs.

In the known conventional stand device described in the foregoing Japanese Utility Model Publication Sho 51-10536, in which the vehicle body can be stood up either with the rear wheel grounded or floated only by a main stand, the stand (legs of the stand) is turned forwardly from a set-back position upon the stoppage of the vehicle; it is locked automatically when coming in contact with the ground at a position rearwardly of its pivot, so that the vehicle body is stood up with the rear wheel grounded; and thereafter, the vehicle body is pulled backward with the rear wheel lifted a little upwardly while the stand is turned further forward to a given erected position to be locked automatically, so that the vehicle is stood up with the rear wheel floated.

However, in such a known conventional stand device, when the vehicle body is stood up with the rear wheel floated, it can be stood up stably with the stand being turned to an optimum erected position, while when the vehicle body is stood up with the rear wheel grounded, the stand is locked in the middle of the pivotal movement to the optimum erected position so as to be grounded at a position rearwardly of its pivot, so that it is impossible for the vehicle body to be stood up stably as when stood up with the rear wheel floated. Also, when the standing condition of the vehicle is shifted from a condition in which the rear wheel is grounded to a condition in which the rear wheel is floated, the vehicle body must be pulled backward, with the rear thereof lifted a little upwardly, which requires a large force.

Further, from DE 581 754 there is known a stand device for a motorcycle having a main stand with a pair of left and right legs, wherein each of said left and right legs comprises a main leg portion, said main leg potions being pivotally connected to the motorcycle's body frame. Therein, said main leg portions are pivotal between a set-back position and an erected position. Each of said main leg portions is connected to a shoe-like member, said shoe-like members being pivotally connected to respective main leg portions. Further, said shoe-like members are rigidly connected to each other by a bar, such that the shoe-like members are only pivotable together about the same pivot axes. The erected position of the stand device is defined by a stopper means. A first three point standing is reached in that the driver steps on the bar e resulting in that the shoe-like members are placed on the ground, by pulling the wheel backwards the main leg portions are engaged with the stopper means. A second three point standing with the higher lifted rear wheel is reached in that the driver steps on the bar f which connects the shoe-like members. This results in that the main leg portions are pivoted together with the shoe-like portions, wherein the shoe-like portions and the main leg portions are extending in line with each other. By pulling the rear wheel, the rear wheel is lifted and the main legs are further rotated until reaching the stopper means. In both three point standing positions, it is necessary to lift the rear wheel to reach the erected postion of the main leg portions.

In view of the foregoing, it is an object of this invention toprovide a stand device for motorcycles as indicated above capable of standing up the vehicle body stably at all times either with the rear wheel grounded or floated.

This objective is solved in an inventive manner by a stand device for a two-wheel vehicle having the features of claim 1.

Accordingly, if the main leg is displaced from the set-back position to the erected position, the main leg is brought into contact, at its lower end, with the ground in a given erected position while the sub-leg is turned rearwardly by the contact of the leg with the ground, whereby when the main leg is brought into contact with the ground at the given erected position, the vehicle body can be stood up stably with the rear wheel grounded.

According to a preferred embodiment of the stand device, the main leg portion of each of said left and right legs is pivotally mounted with one end section thereof to a housing section of the power system unit or a body frame of the vehicle for displacement to either of the set-back or the erected position, wherein the respective other end of the main leg portion integrally comprises a grounding foot.

It is preferable if the sub-leg portion is connected to the respective main leg portion near the end of the main leg portion comprising the grounding foot, wherein the sub-leg portion (13) is mounted to the main leg portion at a position inwardly of the grounding foot.

It is further beneficial if the sub-leg portion of each of said left and right legs is biased towards a stretched position in line with the respective main leg portion by a biasing force of at least one spring member and is connected to said main leg portion for rearward pivotal movement from the stretched position against said biasing force.

According to the embodiments as described above, each of a pair of left and right legs of the stand device is configured such that the main leg and the sub-leg extend in line at its set-back position in which the leg is turned up approximately in a horizontal direction, and when the leg is displaced from the set-back position to an erected position, the leg is brought into contact, at its lower end, with the ground in a given erected position while the sub-leg is turned rearwardly against the bias force by a resistance force caused by the contact of the leg with the ground, whereby when the main leg is brought into contact with the ground at the given erected position, the vehicle body can be stood up stably with the rear wheel grounded.

According to a further preferred embodiment, the main leg portions of the pair of left and right legs of the main stand are integrally coupled to each other, wherein the sub-leg portions are respectively connected to said integrally coupled left and right main legs for independent pivotal movement.

Thus, if only the vehicle body is tilted alternately to the left and right sides, the resistance forces on the left and right sub-legs from the ground are removed alternately on one leg at each tilting movement, the left and right sub-legs are stretched in line with the main legs which has been turned to the given erected position by the bias force, one sub-leg at each tilting movement, so as to be brought into contact, at their lower ends, with the ground, whereby when the sub-legs are brought into contact with the ground at the given erected position, the vehicle body can be stood up stably with the rear wheel floated. Consequently, the vehicle body is easily stood up without need of a large force when the standing condition of the vehicle is shifted from a condition in which the rear wheel is grounded to a condition in which the rear wheel is floated.

According to another preferred embodiment, there is provided a control member for controlling a displacement of the main stand between the set-back and the erected position of the main leg portions of the pair of left and right legs of the main stand, wherein the control member is placed in a location remote of the main stand.

It is preferable if the control member is connected to at least one of the main leg portions of the main stand through a cable and a spring member.

It is further beneficial if there is provided a lever member being integrally coupled to at least one of the main leg portions of the left and right legs of the main stand, wherein said lever member is adapted to stop a forward pivotal movement of the main leg portions from a set-back position to the erected position at a predetermined position.

It is further preferable if there is provided a return spring for biasing the main leg portions towards the set-back position.

In the following, the present invention will be explained with respect to several embodiments thereof in conjunction with the accompanying drawings, wherein:
- Fig. 1: is a side view of an example of a motorcycle incorporating a stand device;
- Fig. 2: is a perspective view of an embodiment of the stand device, in a set-back position;
- Fig. 3: is a perspective view of the stand device of Fig. 2, at an erected position when the vehicle body is stood up with the rear wheel grounded;
- Fig. 4: is a perspective view of the stand device of Fig. 2, at an erected position when the vehicle body is stood up with the rear wheel floated; and
- Fig. 5: shows side views of the motorcycle of Fig. 1, (A) with the stand device in a set-back position, (B) with the vehicle body being stood up with the rear wheel grounded, and (C) with the vehicle body stood up with the rear wheel floated.

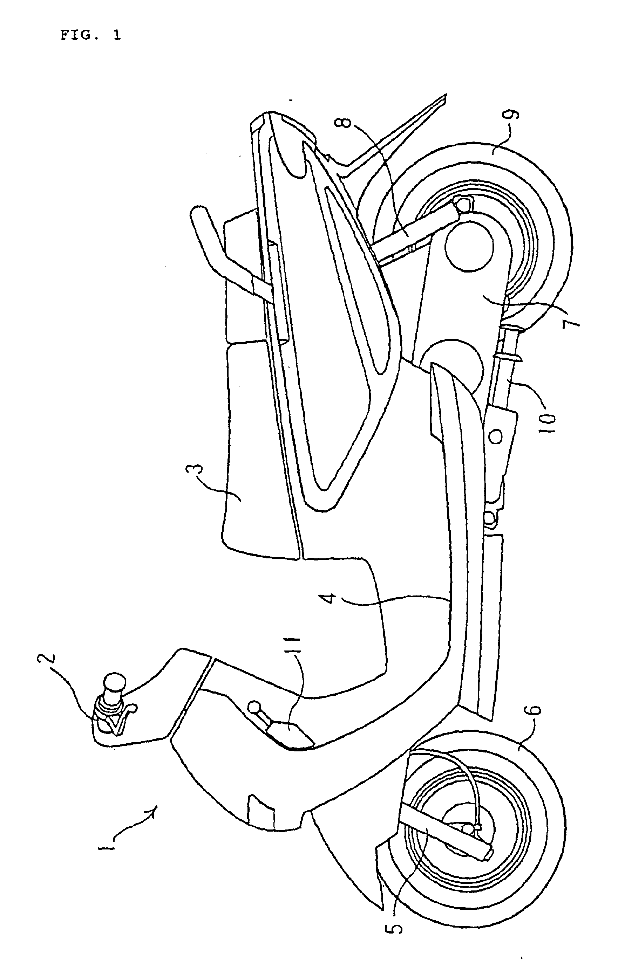

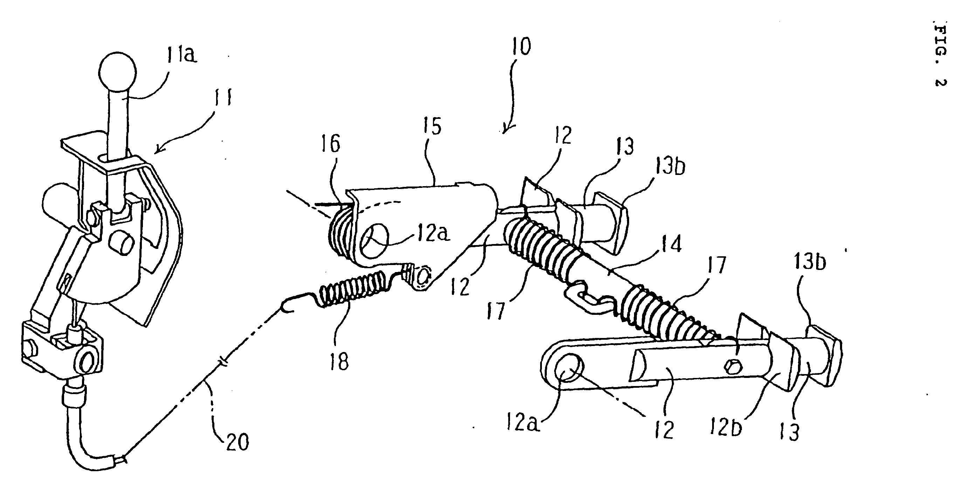

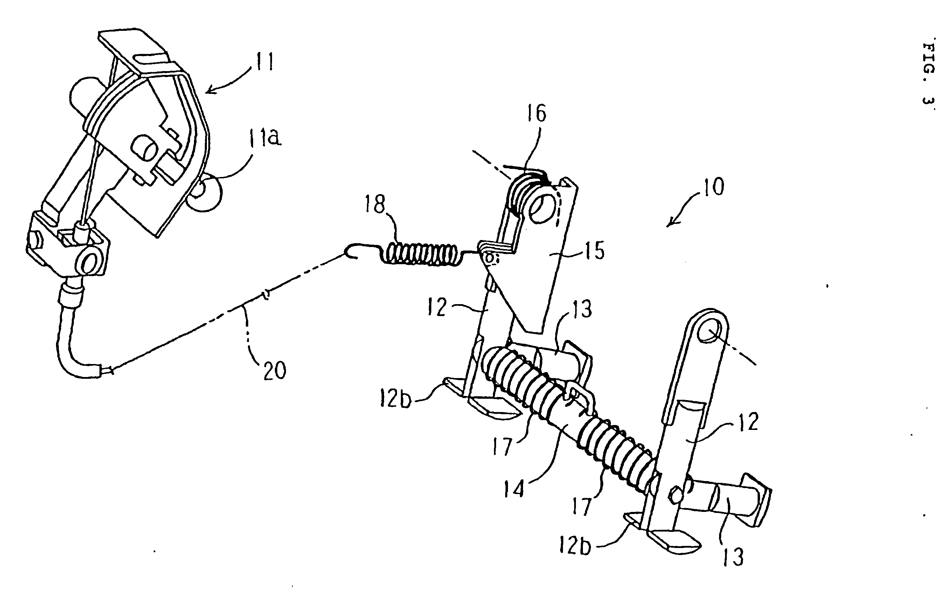

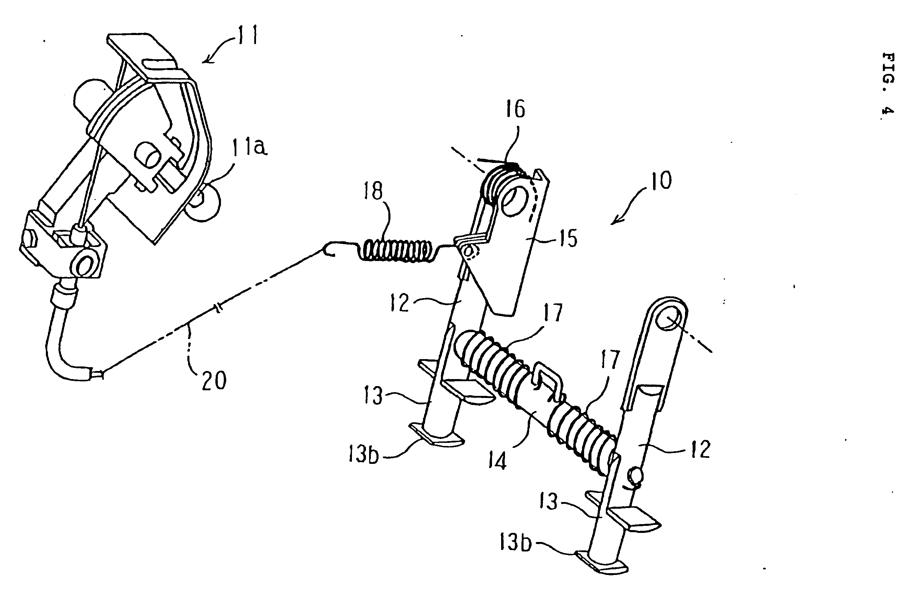

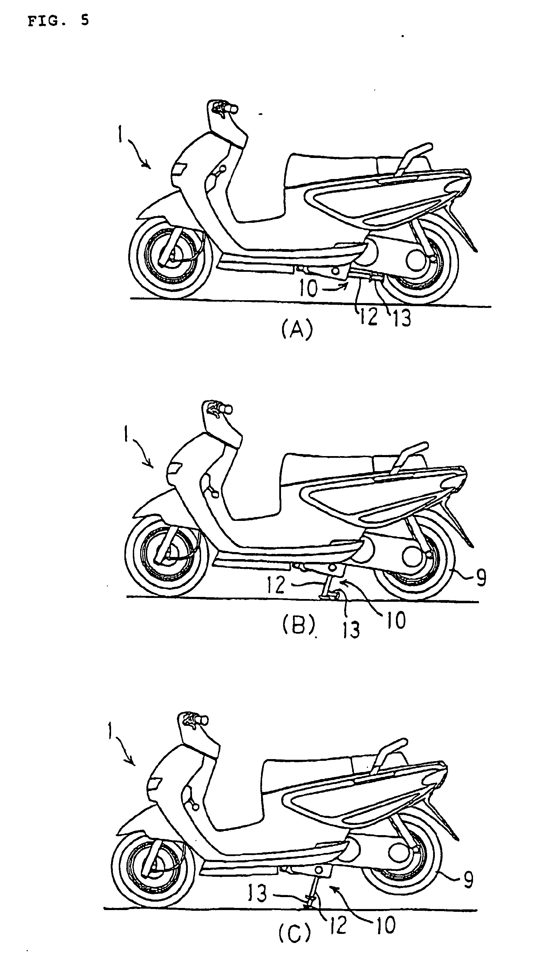

Now, an embodiment of the present stand device for motorcycles will be described below with reference to the drawings. Fig. 1 shows the whole of a motorcycle; Fig. 2 a view of a stand device of this embodiment in a set-back position; Fig. 3 a view of the stand device at an erected position when the vehicle body is stood up with the rear wheel grounded; Fig. 4 a view of the stand device at an erected position when the vehicle body is stood up with the rear wheel floated; and Fig. 5 views of the motorcycle according to this embodiment, (A) with the stand device in a set-back position, (B) with the vehicle body being stood up with the rear wheel grounded, and (C) with the vehicle body stood up with the rear wheel floated.

The motorcycle with a stand device of this embodiment is a scooter type motorcycle, as shown in Fig. 1, in which low and wide steps 4 are formed between the handle 3 and a seat 3, and a driver rides the vehicle sitting on the seat 3 with his or her feet rested on the steps 4 and holding the grips of the handle 2 in a straightened-up fashion. At the front of the motorcycle 1 is provided, for rotation, a steering section including the handle 2, a steering shaft (not shown) as a rotation axis, and front forks 5, and to the lower ends of the left and right front forks 5 is fitted a front wheel 6 for rotation.

Rearwardly of the steering section are provided wide steps 4 for the driver to rest his or her feet at a low position; to the rear of the steps 5 is disposed the seat 3 for a driver to sit on with his or her feet rested on the steps 4; downwardly of the seat 3 is mounted, to a body frame, an integrated power system unit 7 including an engine, a transmission, an air cleaner, etc, for swinging movement as a swinging arm, with a cushion unit 8, comprised of a hydraulic shock absorber and a coil spring, interposed; and a rear wheel 9 is fitted to the rear end of the power system unit 7 in a cantilever fashion.

As a stand device for standing up the vehicle body, disposed at a lower part thereof, a main stand 10 with a pair of left and right legs is provided at the forward bottom of the power system unit 7 for pivotal movement. In this embodiment, a control section 11 for displacing the legs of the main stand to either of set-back and erected positions, is fitted fixedly to the body frame such that it is exposed from a cover member covering the front of the vehicle body, at a location forwardly and upwardly of the steps 4, and displacement of the legs of the main stand 10 to set-back and erected positions is performed by remote control from the control section 11 through a cable.

Although the specific mounting structure of the main stand 10 to the power system unit 7 is not illustrated, it is not different particularly from a conventional main stand generally in use for scooter type motorcycles, and while in this embodiment, the main stand 10 is mounted to the power system unit 7, this invention is not limited to that, and it may be attached to a body frame through mounting brackets.

The stand device of this embodiment provided on the motorcycle 1 is arranged, as shown in Fig. 2-Fig. 4, such that each of the left and right legs of the main stand 10 is comprised of a main leg 12 and a sub-leg 13, and the left and right legs 12 are connected integrally to each other by a cross pipe 14 and mounted pivotally to a body member (housing section of the power system unit 7) with unillustrated bolts through collars at mounting holes 12A formed at one ends thereof.

In each of the pair of left and right legs of the main stand 10, the main leg 12 having one end mounted pivotally to a body member (housing section of the power system unit 7) is formed, at the other end, with a grounding foot 12b integrally, and the sub-leg 13 is mounted, at one end, to the main leg at a position inwardly of the grounding foot 12b, with a bolt through a collar, for pivotal movement only in the rearward direction from the stretched position in line with the main leg 12, the sub-leg 13 being formed, at the other end, with a grounding foot 13b integrally.

In addition, a lever member 15 is coupled integrally to at least either of the left and right main legs 12 (to the right leg in the figure) ; the lower member 15 is adapted to come in contact with a stopper of a body member (housing section of the power system unit 7) to stop, at a given erected position, the forward pivotal movement of the main leg 12 from a set-back position; and a return spring 15 for biasing the main leg 12 toward the set-back position, that is, in an approximately horizontal and rearward direction, is fitted around the mounting hole 12a passing through the connecting section of the main leg 12 and the lever member 15, with one end engaged with a body member (housing section of the power system unit 7) and the other end engaged with the lever member 15.

Further, for the purpose of biasing the sub-leg 13, turnable only in the rearward direction from the axial line of the main leg 12, toward a stretched position in line with the main leg 12, a pair of left and right torsion springs 17 are fitted on the cross pipe 14, with one ends engaged with the cross pipe 17 and the other ends engaged with the sub-legs 13. Furthermore, although not shown in the figure, a compression spring for pushing the head of the sub-leg 13 (on the pivot shaft side), is inserted in the cylindrical portion of each main leg 13 at a position inwardly of the pivot of the sub-leg 13 (forwardly of the pivot in the set-back position and upwardly of the pivot in the erected position) to provide reliable locking of the sub-leg 13 at either of stretched and rearwardly turned positions.

To the main stand 10 at the lever member 15 coupled integrally to the main leg 12, is connected, through a shock-absorbing expansion spring 18, a cable 20 from the control section 11 provided remote from the main stand 10. Since the spring force of the expansion spring 18 is set stronger than that of the return spring 16 for biasing the main leg 12 toward the set-back position, when the cable 20 is pulled by a control lever 11a of the control section 11 being manipulated, the main leg 12 is turned from the set-back position to the erected position against the spring force of the return spring 16, together with the lever member 15 to which is connected the cable 20 through the extension spring 18, and when the cable 20 is loosened by the control lever 11a being manipulated, the main leg 12 is automatically returned from the erected position to the set-back position by the spring force of the return spring 16.

In the event of some force being exerted on the main leg 12, pulling of the cable 20 by the control lever 11 a will simply cause extension of the shock absorbing extension spring 18 and the main leg 12 is not forced back to the erected position from the set-back position, but if the control lever 11 a is shifted downwardly to a locking position of the control section 11 with the cable 20 kept tightened, contraction of the extension spring 18 will cause the main leg 12 to be turned automatically from the set-back position to the erected position against the spring force of the return spring 16 when the resistance force on the main leg 12 is removed.

In the stand device of this embodiment comprised of the main stand 10 and the control section 11 as described above, when the control lever 11a is shifted upwardly to a free position of the control section 11 to loosen the cable 20, the main legs 12 are turned rearwardly to the horizontally extending set-back position by the bias force of the return spring 16, and the sub-legs 13 are stretched in line with the main legs 12 by the bias force of the torsion springs 17, as shown in Fig. 2. In this condition, as shown in Fig. 5(A), the vehicle body of the motorcycle 1 cannot be stood up at the time of stoppage because of the main stand 10 being in the set-back position with respect to the vehicle body.

In such a set-back condition, if a driver, while on the vehicle, manipulates the control lever 11 a of the control section 11, causing the control lever 11 a to be shifted downwardly to a locking position to pull the cable 20, as shown in Fig. 3, the main legs 12 coupled integrally to the lever member 15 connected to the cable 20 through the extension spring 18, are turned forwardly against the bias force of the return spring 16 and are brought into contact, at the grounding feet 12b, with the ground, at a given erected position in which the pivotal movement of the legs 12 is stopped, while the sub-legs 13 connected to the main legs 12 come in contact with the ground to be turned rearwardly relative to the main legs 12 against the bias force of the torsion springs 17. As a result, as shown in Fig. 5(B), the vehicle body of the motorcycle 1 is stood up stably with the rear wheel grounded because of the main legs 12 of the main stand 10 being brought into contact with ground at a given erected position.

When the main legs 12 are thus displaced from a setback position to a given erected position, the grounding feet 12b of the main legs 12 come in contact with the ground before the main legs 12 reach the given erected position, that is, before the main legs 12 pass right under the mounting point (pivot of the main legs 12). At this moment, if the driver, while on the vehicle, puts his or her feet down on the ground and pulls slightly the vehicle body backward, the main legs 12 are stopped at the given erected position after passing right under the mounting point (pivot of the main legs 12).

In addition, in such a stopping condition in which the vehicle body is stood up stably with the rear wheel grounded because of the main legs 12 being set in the given erected position, if only the driver alights from the vehicle and tilting the vehicle body alternately to the left and right sides, the left and right main legs 12 are disengaged alternately from the ground and thus the resistance forces on the left and right sub-legs are removed alternately on one side at each tilting movement, so that each of the left and right sub-legs 13, as shown in Fig. 4, is turned to a stretched position in line with the main leg 12 which is in an erected position, by the bias force of the torsion spring 17 fitted on the cross pipe 14, and brought into contact, at the grounding foot 13b, with the ground. As a result, as shown in Fig. 5(C), the vehicle body of the motorcycle 1 is stood up stably with the rear wheel floated because of the sub-legs 13 of the main stand 10 in the given erected position being brought into contact with the ground.

In such a parking condition in which the vehicle body is stood up with the rear wheel 9 floated because of the sub-legs 13 being brought into contact with the ground, if the vehicle body is pushed forward with the control lever 11 a of the control section 11 kept in a locking position, the standing condition of the vehicle body can be changed easily from a pushing condition in which the rear wheel 9 is floated to a stopping condition in which the rear wheel 9 is grounded. In the stopping condition in which the vehicle body is stood up with the rear wheel 9 grounded, if a driver on the vehicle manipulates the control lever 11a of the section 11 back to a free position and starts the vehicle through throttle control, the main legs 12 in a given erected position will be returned automatically to a set-back position beyond the loading point (right under the pivot of the main legs 12) by the bias force of the return spring 16.

In the stand device for motorcycles of this embodiment as described above, in either case of the vehicle body being stood up with the rear wheel grounded and floated, the main stand 10 supporting the vehicle body is in the same given erected position and the relation between the center of gravity of the vehicle and the grounding position of the main stand 10 doesn't change significantly, so that the vehicle body can be stood up stably in either case, at an optimum erected position of the main stand 10, and when the standing condition of the vehicle body is shifted from a condition in which the rear wheel is grounded to a condition in which the rear wheel is floated, it can be changed by simple actions of tilting the vehicle body to the left and right sides with a small force.

In addition, in this embodiment, the main legs 12 can be displaced to set-back and erected positions by remote control from the control section 11 through the cable 20 and the coil spring 18 using the control lever 11 a, so that if a driver on the vehicle manipulates the control lever 11 a of the control section 11 without alighting from the vehicle, the driver can stand up the vehicle body (with the rear wheel grounded) immediately after stoppage of running, or can start the vehicle after getting on the vehicle in a standing condition with the rear wheel grounded.

While an embodiment of a stand device for motorcycles of this invention has been described, this invention is not limited to that, and may be applied, for example, in addition to a scooter type motorcycle, to other types of motorcycles. Regarding the stand device, this invention is not necessarily limited to the type in which the legs are displaced to setback and erected positions by remote control through the cable, and also for the structure of the main stand, this invention is not limited to that shown specifically in the figure. As such, it should be understood that changes and modifications may be made as appropriate without departing from the scope of the invention.

According to the stand device for motorcycles of this embodiment as described above, in either case of the vehicle body being stood up with the rear wheel grounded and floated, the vehicle body can be stood up stably at all times at an optimum erected position of the stand legs, and when the standing condition of the vehicle is shifted from a condition in which the rear wheel is grounded to a condition in which the rear wheel is floated, it can be changed easily by simple actions with a small force

The embodiments explained above refer to a stand device with a pair of left and right legs disposed at a lower part of a vehicle body for pivotal movement, wherein each of said pair of left and right legs comprises a main leg having one end pivotally mounted to a body member for displacement to either of setback and erected positions and a sub-leg connected to said main leg near the other end for pivotal movement, said main leg being configured such that it has a length enough to stand up the vehicle body with a rear wheel grounded at said erected position, and said sub-leg being biased toward a stretched position in line with said main leg and connected to said main leg for rearward pivotal movement against said bias force.

It is beneficial if left and right sub-legs are connected to said integrally coupled left and right main legs for independent pivotal movement, respectively.

It is also beneficial if said main leg is adapted to be displaced to set-back and erected positions by remote control, through a cable and a coil spring, from a control section provided on a desirable location of the vehicle body.

## Claims

1. A stand device for a two-wheel vehicle, in particular a motorcycle, having a main stand (10) with a pair of left and right legs, wherein each of said left and right legs comprises a main leg portion (12), being pivotally connectable to the vehicle between a set-back position and an erected position thereof, and a sub-leg portion (13), being pivotally attached to the main leg portion, **characterized in that** a length of the main leg portion (12) is set such that the main leg portion (12) is able to pivot between the set-back and the erected position to stand up a vehicle body with a rear wheel (9) being grounded.

2. A stand device according to claim 1, **characterized in that** the main leg portion (12) of each of said left and right legs is pivotally mountable with one end section thereof to a housing section of the power system unit (7) or a body frame of the vehicle for displacement to either of the set-back or the erected position, wherein the respective other end of the main leg portion (12) integrally comprises a grounding foot (12b).

3. A stand device according to claim 2, **characterized in that** the sub-leg portion (13) is connected to the respective main leg portion (12) near the end of the main leg portion (12) comprising the grounding foot (12b), wherein the sub-leg portion (13) is mounted to the main leg portion (12) at a position inwardly of the grounding foot (12b).

4. A stand device according to at least one of the preceding claims 1 to 3, **characterized in that** the sub-leg portion (13) of each of said left and right legs is biased towards a stretched position in line with the respective main leg portion (12) by a biasing force of at least one spring member (17) and is connected to said main leg portion (12) for rearward pivotal movement from the stretched position against said biasing force.

5. A stand device according to at least one of the preceding claims 1 to 4, **characterized in that** the main leg portions (12) of the pair of left and right legs of the main stand (10) are integrally coupled to each other, wherein the sub-leg portions (13) are respectively connected to said integrally coupled left and right main legs (12) for independent pivotal movement.

6. A stand device according to at least one of the preceding claims 1 to 5, **characterized by** a control member (11) for controlling a displacement of the main stand (10) between the set-back and the erected position of the main leg portions (12) of the pair of left and right legs of the main stand (10), wherein the control member is placed in a location remote of the main stand (10).

7. A stand device according to claim 6, **characterized in that** the control member (11) is connected to at least one of the main leg portions (12) of the main stand (10) through a cable (20) and a spring member (18).

8. A stand device according to at least one of the preceding claims 1 to 7, **characterized by** a lever member (15) being integrally coupled to at least one of the main leg portions (12) of the left and right legs of the main stand (10), wherein said lever member (15) is adapted to stop a forward pivotal movement of the main leg portions (12) from a set-back position to the erected position at a predetermined position.

9. A stand device according to at least one of the preceding claims 1 to 8, **characterized by** a return spring (16) for biasing the main leg portions (12) towards the set-back position.

## Patentansprüche

1. Ständervorrichtung für ein Zweiradfahrzeug, insbesondere ein Motorrad, das einen Hauptständer (10) hat, mit einem Paar von linken und rechten Schenkeln, wobei jeder der linken und rechten Schenkel einen Schenkelabschnitt (12) aufweist, der mit dem Fahrzeug zwischen einer Zurücksetzposition und einer Aufrichtposition schwenkbar verbindbar ist, und einen Unter- Schenkelabschnitt (13), der schwenkbar mit dem Haupt- Schenkelabschnitt verbunden ist, **dadurch gekennzeichnet, dass** eine Länge des Haupt- Schenkelabschnittes (12) derart festgelegt wird, dass der Haupt- Schenkelabschnitt (12) in der Lage ist, zwischen der Zurücksetzposition und der Aufrichtposition zu schwenken, um eine Fahrzeugkarosserie mit einem Hinterrad (9), das den Boden berührt, aufzustellen.

2. Ständervorrichtung nach Anspruch 1, **dadurch gekennzeichnet, dass** der Haupt- Schenkelabschnitt (12) jedes der linken und rechten Schenkel mit einem Endabschnitt desselben mit einem Gehäuseabschnitt der Antriebssystemeinheit (7) oder einem Karosserierahmen des Fahrzeuges für die Verlagerung in entweder die Zurücksetzposition oder die Aufrichtposition montierbar ist, wobei das jeweils andere Ende des Haupt- Schenkelabschnittes (12) einstückig einen Bodenaufsetzfuß (12b) aufweist.

3. Ständervorrichtung nach Anspruch 2, **dadurch gekennzeichnet, dass** der Unter-Schenkelabschnitt (13) mit dem jeweiligen Haupt- Schenkelabschnitt (12) nahe des Endes des Haupt- Schenkelabschnittes (12), der den Bodenaufsetzfuß (12b) aufweist, verbunden ist, wobei der Unter- Schenkelabschnitt (13) an dem Haupt-Schenkelabschnitt (12) an einer Position einwärts des Bodenaufsetzfußes (12b) montiert ist.

4. Ständervorrichtung nach zumindest einem der vorhergehenden Ansprüche 1 bis 3, **dadurch gekennzeichnet, dass** der Unter- Schenkelabschnitt (13) von jedem des linken und rechten Schenkels in die Richtung zu der gestreckten Position in einer Linie mit dem jeweiligen Haupt- Schenkelabschnitt (12) durch eine Vorspannkraft von zumindest einem Federteil (17) vorgespannt ist und mit dem Haupt- Schenkelabschnitt (12) für eine Rückwärts- Schwenkbewegung aus der gestreckten Position entgegen die Vorspannkraft verbunden ist.

5. Ständervorrichtung nach zumindest einem der vorhergehenden Ansprüche 1 bis 4, **dadurch gekennzeichnet, dass** die Haupt- Schenkelabschnitte (12) des Paares des linken und rechten Schenkels des Hauptständers (10) miteinander einstückig gekuppelt sind, wobei die Unter- Schenkelabschnitte (13)jeweils mit dem integralen linken und rechten Schenkel (12) zur unabhängigen Schwenkbewegung gekuppelt sind.

6. Ständervorrichtung nach zumindest einem der vorhergehenden Ansprüche 1 bis 5, **gekennzeichnet durch** ein Steuerungsteil (11) zum Steuern einer Verlagerung des Hauptständers (10) zwischen der Zurücksetzposition und der Aufrichtposition der Haupt- Schenkelabschnitte (12) des Paares der linken und rechten Schenkel des Hauptständers (10), wobei das Steuerungsteil in einem Ort platziert ist, der von dem Hauptständer (10) entfernt ist.

7. Ständervorrichtung nach Anspruch 6, **dadurch gekennzeichnet, dass** das Steuerungsteil (11) mit zumindest einem der Haupt- Schenkelabschnitte (12) des Hauptständers (10) durch ein Kabel (20) und ein Federteil (18) verbunden ist.

8. Ständervorrichtung nach zumindest einem der vorhergehenden Ansprüche 1 bis 7, **gekennzeichnet durch** ein Hebelteil (15), einstückig gekuppelt mit zumindest einem der Haupt- Schenkelabschnitte (12) des linken und rechten Schenkels des Hauptständers (10), wobei das Hebelteil (15) vorgesehen ist eine Vorwärts-Schwenkbewegung der Haupt- Schenkelabschnitte (12) aus der Rücksetzposition in die aufgerichtete Position an einer vorbestimmten Position zu stoppen.

9. Ständervorrichtung nach zumindest einem der vorhergehenden Ansprüche 1 bis 8, **gekennzeichnet durch** eine Rückholfeder (16) zum Vorspannen der Haupt-Schenkelabschnitte (12) in die Richtung zu der Rücksetzposition.

## Revendications

1. Dispositif de support pour un véhicule à deux roues, en particulier un motocycle, comportant un support principal (10) avec une paire de béquilles gauche et droite, dans lequel chacune desdites béquilles gauche et droite comprend une partie de béquille principale (12), pouvant être reliée de façon pivotante au véhicule entre une position escamotée et une position dressée de celle-ci, et une partie de béquille inférieure (13), fixée de façon pivotante à la partie de béquille principale, **caractérisé en ce qu'**une longueur de la partie de béquille principale (12) est établie de sorte que la partie de béquille principale (12) puisse pivoter entre la position escamotée et la position dressée pour lever un corps de véhicule avec une roue arrière (9) en contact avec le sol.

2. Dispositif de support selon la revendication 1, **caractérisé en ce que** la partie de béquille principale (12) de chacune des béquilles gauche et droite peut être montée de façon pivotante avec une section d'extrémité de celle-ci sur une section de logement de l'unité de système moteur (7) ou un cadre de corps du véhicule pour le déplacement jusqu'à la position escamotée ou la position dressée, dans lequel l'autre extrémité respective de la partie de béquille principale (12) comprend de façon solidaire un pied de sol (12b).

3. Dispositif de support selon la revendication 2, **caractérisé en ce que** la partie de béquille inférieure (13) est reliée à la partie de béquille principale (12) près de l'extrémité de la partie de béquille principale (12) comprenant le pied de sol (12b), dans lequel la partie de béquille inférieure (13) est montée sur la partie de béquille principale (12) au niveau d'une position vers l'intérieur du pied de sol (12b).

4. Dispositif de support selon au moins une des revendications précédentes 1 à 3, **caractérisé en ce que** la partie de béquille inférieure (13) de chacune des béquilles gauche et droite est contrainte vers une position allongée alignée avec la partie de béquille principale (12) respective par une force de contrainte d'au moins un ressort (17) et est reliée à ladite partie de béquille principale (12) pour un mouvement pivotant vers l'arrière à partir d'une position allongée contre ladite force de contrainte.

5. Dispositif de support selon au moins une des revendications précédentes 1 à 4, **caractérisé en ce que** les parties de béquille principales (12) de la paire de béquilles gauche et droite du support principal (10) sont couplées de façon solidaire l'une à l'autre, dans lequel les parties de béquille inférieures (13) sont reliées respectivement auxdites béquilles principales (12) gauche et droite couplées de façon solidaire pour un mouvement pivotant indépendant.

6. Dispositif de support selon au moins une des revendications précédentes 1 à 5, **caractérisé par** un élément de commande (11) destiné à commander un déplacement du support principal (10) entre la position escamotée et la position dressée desdites parties de béquille principales (12) de la paire de béquilles gauche et droite du support principal (10), dans lequel l'élément de commande est placé dans un emplacement éloigné du support principal (10).

7. Dispositif de support selon la revendication 6, **caractérisé en ce que** l'élément de commande (11) est relié à au moins une des parties de béquille principales (12) du support principal (10) par l'intermédiaire d'un câble (20) et d'un élément de ressort (18).

8. Dispositif de support selon au moins une des revendications précédentes 1 à 7, **caractérisé par** un élément de levier (15) couplé de façon solidaire à au moins une des parties de béquille principales (12) des béquilles gauche et droite du support principal (10), dans lequel ledit élément de levier (15) est adapté pour arrêter un mouvement pivotant vers l'avant des parties de béquille principales (12) de la position escamotée à la position dressée au niveau d'une position prédéterminée.

9. Dispositif de support selon au moins une des revendications précédentes 1 à 8, **caractérisé par** un ressort de rappel (16) pour contraindre les parties de béquille principales (12) vers la position escamotée.
